# EUROPEAN PATENT APPLICATION

(11) **EP 0 810 112 A2**
(43) Date of publication of application: **03.12.1997**
(21) Application number: 97108210.2
(22) Date of filing: 21.05.1997
(51) Int. Cl.: B60H 1/34

(54) **Vent for distributing, directing, regulating and blocking the air-conditioning stream of motor vehicles**

(30) Priority: 28.05.1996 IT TO960115 U
(71) Applicant: FOGGINI PROGETTI S.r.l., I-10092 Beinasco Torino (IT)
(72) Inventor: Foggini, Paolo, 10024 Moncalieri (Prov. of Torino) (IT)
(74) Representative: Modiano, Guido, Dr.-Ing.

(57) **Abstract**

A vent comprising a hollow cylindrical body (11) ending with a circular discharge port (15), whereat two front flaps (16-17) are provided which are supported by a rotatable ring (14) so that they can oscillate and are interconnected in order to rotate parallel to each other between two extreme positions, respectively a position in which they are co-planar and interact with each other in order to fully close the discharge port (15), and a maximum mutual spacing position, in order to fully open the front of the port. The flaps (16-17) can assume a plurality of positions parallel to each other which are intermediate with respect to the extreme positions and are matched by an equal number of angles of the stream in the diametrical plane which is perpendicular to said flaps, rotation of the rotatable ring (14) with respect to the body (11) of the vent allowing to orientate the stream along the different diametrical planes, oscillation of the front flaps (16-17) being transmitted to a butterfly valve (21) arranged in the cavity of the body (11) of the vent in order to hermetically block or regulate the air stream passing through the cavity.

## Description

The present invention relates to a vent for distributing the air-conditioning stream of motor vehicles, particularly of cars.

Conventional vents are generally constituted by a large number of parts and the air flow regulation is carried out by acting on at least two different elements in order both to orientate, regulate and block the stream of air delivered by the vent.

A principal aim of the present invention is to provide a vent which is more efficient and handy to use thanks to a substantial structural simplification which allows to orientate, regulate and block the stream of air delivered by the vent by easily and intuitively operating a single element arranged at the front of the vent and comfortably accessible by the user.

Other objects of the invention are to provide a vent which is composed of a limited number of parts, all of which can be substantially assembled in a snap-together fashion and therefore with very low manufacturing and assembly costs, and having a pleasant aesthetic appearance and modest bulk.

According to the invention, this aim as well as these and other important objects are achieved by a vent having the specific characteristics stated in the appended claims.

Substantially, the vent is characterized by a hollow cylindrical body ending with a circular discharge port, at which two front flaps are provided which are substantially shaped like complementary portions of a disk, are supported by a rotatable ring so that they can oscillate, and are interconnected in order to rotate parallel to each other between two extreme positions, respectively a position in which they are co-planar and interact with each other in order to fully close the discharge port, and a maximum mutual spacing position, in order to fully open the front of the port. Between these two extreme positions, the flaps can assume a plurality of intermediate positions which are parallel to each other and matched by an equal number of angles of orientation of the stream in the diametrical plane which is perpendicular to the planes of arrangement of the flaps, whilst the rotation of the rotatable ring and of the flaps supported thereby, with respect to the vent body, allows to orientate the stream along different diametrical planes.

A further characteristic of the vent according to the present invention is constituted by the fact that the oscillation of the front flaps is transmitted, by means of a linkage provided with at least one spherical end joint, to a butterfly valve arranged in the cavity of the cylindrical body of the vent and adapted to hermetically block or regulate the stream of air passing through said body.

Further characteristics, purposes and advantages of the vent according to the present invention will become apparent from the following detailed description and with reference to the accompanying drawings, wherein:

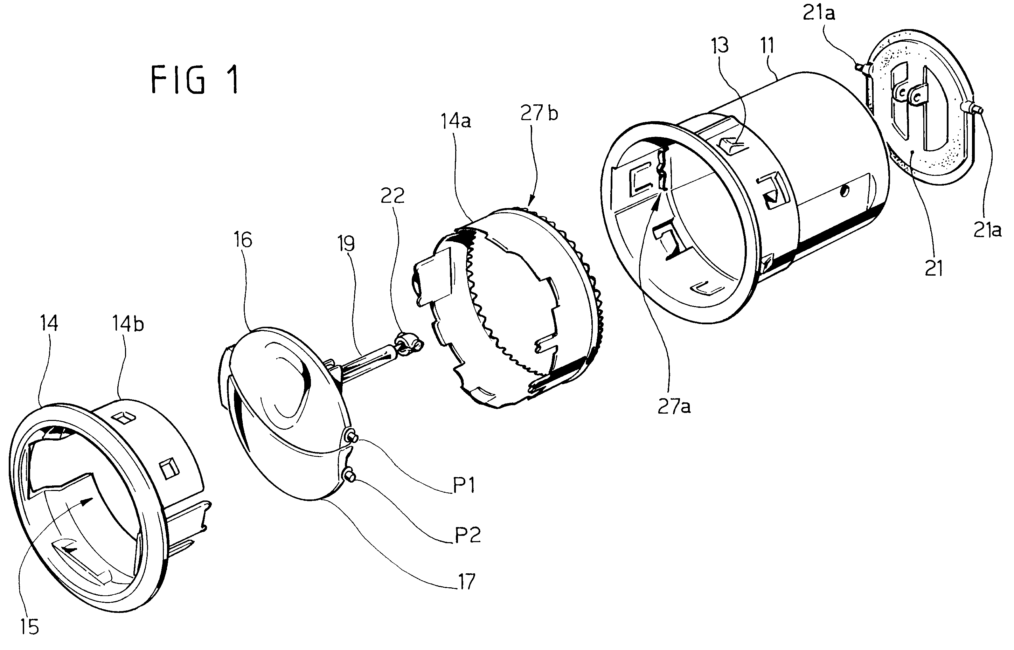

figure 1 is an exploded perspective view of a vent according to the present invention;
figure 2 is a front view of the vent;
figure 3 is a longitudinal sectional view, taken along the plane III-III of figure 2 and illustrating the vent with the front flaps in the position for fully closing the discharge port;
figure 4 is a sectional view, similar to figure 3, of the vent with the front flaps in the position for fully opening the discharge port;
figure 5 is a transverse sectional view, taken along the line V-V of figure 2;
figures 6, 7 and 8 are transverse sectional views, taken along the respective planes VI-VI, VII-VII and VIII-VIII of figure 3;
figure 9 is a partial sectional view, taken along the plane IX-IX of figure 5;
figure 10 is a partial sectional view, taken along the plane X-X of figure 8;
figure 11 is an enlarged-scale view of a detail of figure 3.

In the drawings, the reference numeral 10 generally designates the vent, which comprises a hollow cylindrical body 11, a rear end 11a whereof is adapted to receive a hose or duct for feeding the air used for conditioning a vehicle cabin. The other front end 11b of the body 11 ends with a base 12 used to retain the vent on the fixed structure of the dashboard P or the like. Such retention is provided by the cooperation of a base 12 with flexible teeth 13 provided on the body 11 of the vent and allowing the snap-together connection of the vent 10 in the respective containment seat provided in said dashboard P or the like.

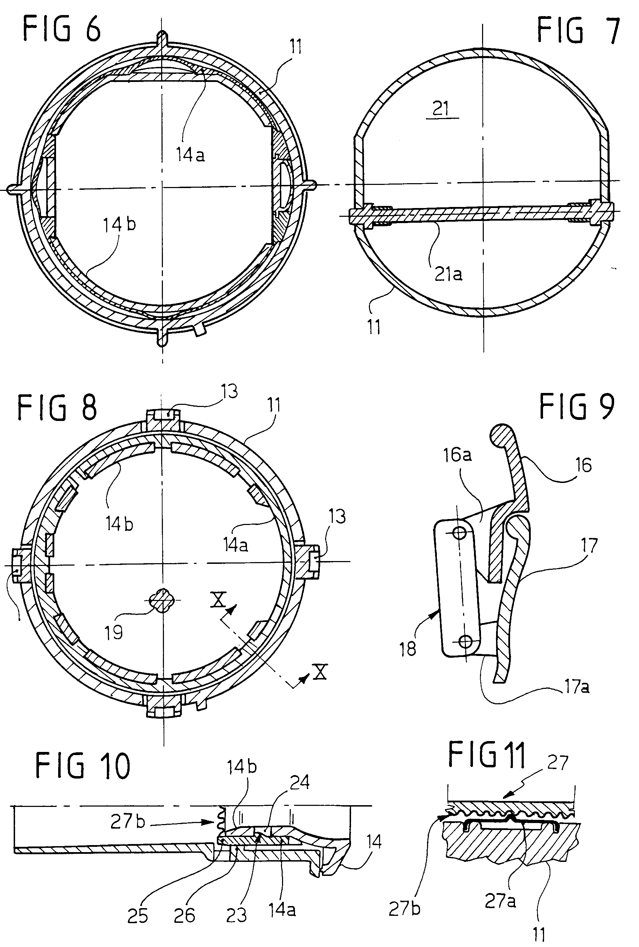

The front end 11b of the body 11 rotatably contains a ring 14 forming a circular port 15 for the discharge of the conditioning air. At the port 15 there are provided two front flaps 16-17 shaped respectively like a crescent and like a partial disk, briefly so as to form complementary circular portions, and supported by the ring 14 so that they can oscillate by means of respective pivots p1-p2. Those flaps 16-17 are interconnected by means of a rod 18 (figure 9) the ends whereof are articulated to corresponding perpendicular lugs 16a-17a of the flaps, in order to rotate together and parallel to each other about their respective pivots when the lower flap 17 is pushed towards the inside of the body 11; the lower flap is provided, for this purpose, with a recessed region 17b used to rest a finger thereon.

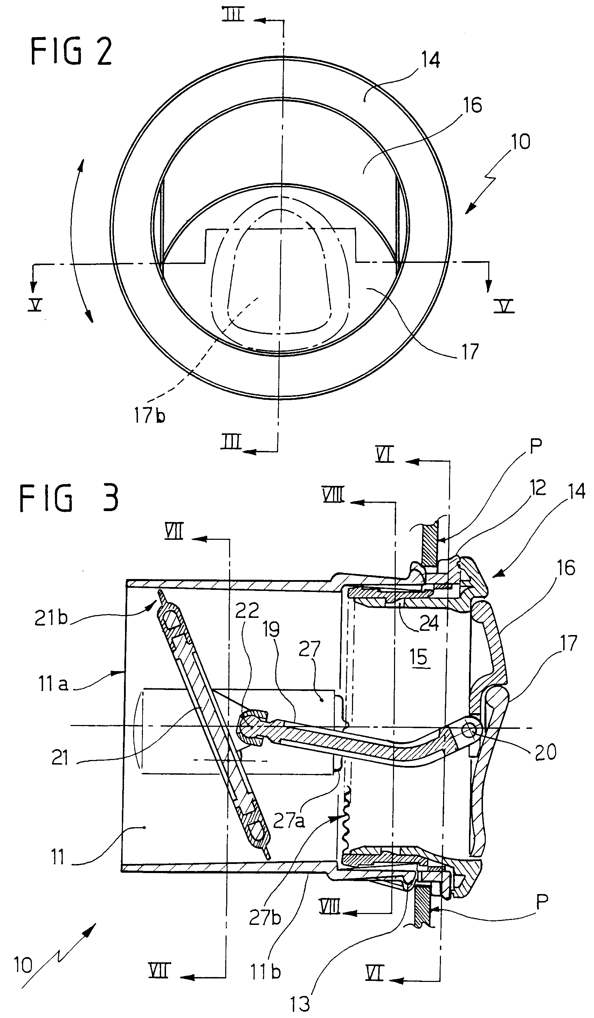

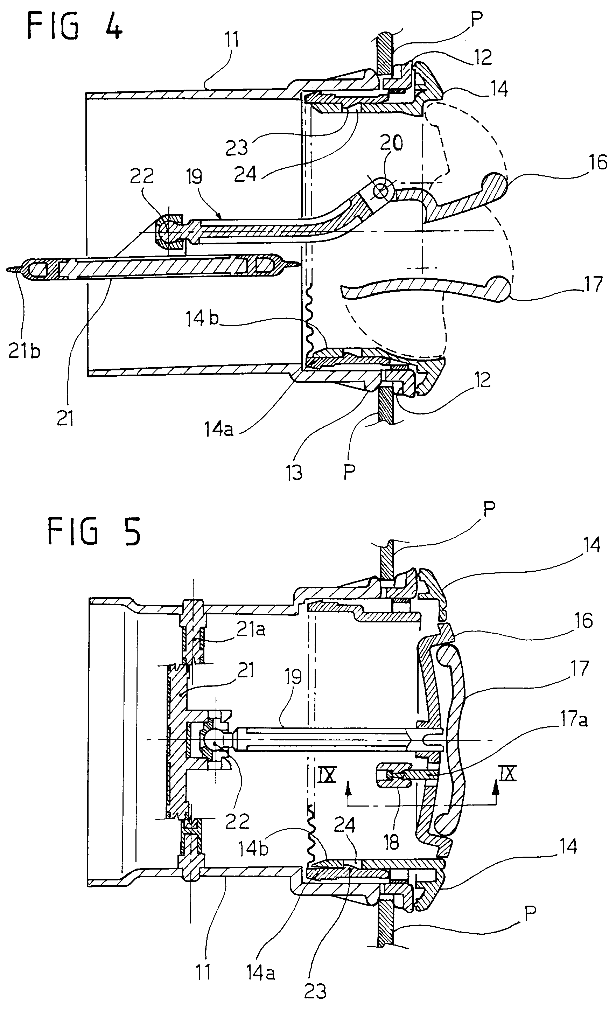

As clearly shown in figures 3 and 4, the flaps 16-17 rotate between two extreme positions; in a first position, in which they are co-planar and interact with each other, as shown in figure 3, they fully close the discharge port 15; in a second position, in which they are at their maximum spacing with respect to each other, as shown in figure 4, they allow full opening of the port.

Between these two extreme positions, the flaps 16-17 can assume a plurality of intermediate positions parallel to each other, which are matched by an equal number of angles of orientation of the air stream in the plane which is perpendicular to the planes of arrangement of the flaps.

By means of a linkage 19, wherein one end is articulated to the flap 16 by means of a cylindrical pivot 20, oscillation of the flap is transmitted to a butterfly valve 21, whereto the other end of the linkage 19 is connected by means of a spherical joint 22 centered on the axis of the cavity of the cylindrical body 11. The butterfly valve 21 is arranged in the cavity of the body 11 and is adapted to hermetically block or regulate the stream of air passing through the body. For this purpose, the valve 21 is pivoted eccentrically with respect to the axis by means of a shaft 21a arranged transversely to the axis of the body 11 and is provided with a peripheral sealing gasket 21b made of flexible material, advantageously soft rubber.

Rotation of the ring 14 and of the flaps 16 and 17 articulated thereto with respect to the body 11 is used to direct the stream along the various diametrical planes passing through the axis of the body 11; this rotation has no effect on the butterfly valve 21 because of the presence of the spherical joint 22 provided at the end of the linkage 19 connected to said valve.

As shown in the figures, the ring 14 is formed by two annular and concentric portions 14a-14b interconnected by teeth 23 of the outer portion 14a which engage, in a snap-together fashion, corresponding openings 24 of the inner portion 14b. The portion 14a is in turn provided with a protruding edge 25 which engages, in order to axially retain the ring, a collar 26 protruding radially inside the cavity of the body 11 (figure 9). The angular arrangements of the ring 14 with respect to the body 11 are elastically stabilized by a position-marking element, generally designated by the reference numeral 27. As shown in the detail view of figure 10, the position-marking element comprises a cusp-shaped spring 27a engaging a crown wheel 27b provided on the front edge of the outer portion 14b of the ring 14.

The effects of the present invention of course also apply to embodiments which achieve equal utility by using the same innovative concept.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A vent for distributing, directing, regulating and blocking the air-conditioning stream of motor vehicles, characterized in that it comprises a hollow cylindrical body (11) ending with a circular discharge port (15), whereat there are provided two front flaps (16-17) supported by a rotatable ring (14) so that they can oscillate and are interconnected in order to rotate parallel to each other between two extreme positions, respectively a position in which they are co-planar and interact with each other in order to fully close the discharge port (15), and a maximum mutual spacing position, in order to fully open the front of said port, and in that said flaps (16-17) can assume a plurality of positions parallel to each other which are intermediate with respect to the extreme positions and are matched by an equal number of angles of orientation of the stream in a diametrical plane which is perpendicular to said flaps, rotation of the rotatable ring (14) with respect to the body (11) of the vent allowing to orientate the stream along different diametrical planes.

2. A vent according to claim 1, characterized in that it comprises a linkage (19) adapted to transmit the oscillation of the front flaps (16-17) to a butterfly valve (21) arranged in a cavity of the body (11) of the vent in order to block or throttle the stream of air passing through said cavity.

3. A vent according to claims 1 and 2, characterized in that said front flaps (16-17) are substantially shaped like complementary portions of a disk and are interconnected by means of a rod (18) the ends whereof are articulated to corresponding perpendicular lugs (16a-17a) of said flaps.

4. A vent according to claims 1 and 2, characterized in that said linkage (19) has an end articulated to a front flap (16) by means of a cylindrical pivot (20) and another end connected to said butterfly valve (21) by means of a spherical joint (22), and in that the center of the spherical joint lies on the axis of the cavity of the body (11) of the vent, so that rotation of the ring (14) has no effect on the butterfly valve (21).

5. A vent according to claims 1, 2 and 4, characterized in that the butterfly valve (21) is pivoted, by means of a shaft (21a) arranged transversely to the axis of the cavity of the body (11), eccentrically with respect to said axis.

6. A vent according to claims 1, 2 and 5, characterized in that the butterfly valve (11) is provided with a peripheral sealing gasket (21b) made of flexible material.

7. A vent according to the preceding claims, characterized in that the rotatable ring (14) is formed by two concentric portions (14a-14b) which can be interconnected in a snap-together manner, and in that the outer portion (14a) is provided with a protruding edge (25) engaging, in order to axially retain the ring, a collar (26) which protrudes radially inside the cavity of the vent body (11).

8. A vent according to claim 1 and any one of claims 2 to 7, characterized in that the angular positions of the ring (14) with respect to the body of the vent (11) are elastically stabilized by a position-marking element (27).

9. A vent according to claims 7 and 8, characterized in that said position-marking element (27) comprises a cusp-shaped spring (27a) which engages a crown wheel (27b) provided on the front edge of the outer portion (14b) of the ring (14).
